# EUROPEAN PATENT APPLICATION

(11) **EP 4 625 746 A1**
(43) Date of publication of application: **01.10.2025**
(21) Application number: 24167034.8
(22) Date of filing: 27.03.2024
(51) Int. Cl.: H02J 3/38

(54) **A CONTROL SYSTEM FOR A POWER SYSTEM COMPRISING AT LEAST TWO CONTROL CHANNELS AND A COMMON INTEGRATOR**

(71) Applicant: Hitachi Energy Ltd, 8050 Zürich (CH)
(72) Inventor: TUCKEY, Andrew, Livingstone, NT, 0837 (AU); PITTO, Giovanni, 16125 Genova (IT)
(74) Representative: Zacco Sweden AB

(57) **Abstract**

Embodiments of the present disclosure provide a control system (100) for controlling unit of a power system (1000). The control system (100) comprises at least two control channels (102) with different control targets. Each control channel (102) of the at least two control channels (102) is arranged to perform one or more control operations for controlling the unit of the power system (1000). Further, at least one control operation is performed as a response to a respective input signal received from the power system (1000). Each of the at least two control channels (102) is connected to a merged control output to the unit of the power system (1000) through a shared integrator (104).

## Description

### TECHNICAL FIELD

The present disclosure relates generally to a field of controllers. More particularly, it is related to a control system for controlling a unit of a power system.

### BACKGROUND

An actuator is a part of a device or machine that may help the device/machine to achieve physical movements by converting energy, often electrical, air, or hydraulic, into mechanical force. The actuator is a component of the device/machine and produces force, torque or displacement in a controlled manner based on input signals. Generally, the actuator is controlled using a controller such a Proportional Integral Derivative (PID) to produce the required energy. For example, when the actuator or the device performs multiple functions or if the actuator or the device is used to control two or more aspects in a system. In such a case, multiple independent control algorithms are used to control the two or more aspects. To give an instance, consider a grid-forming power converter is connected to a microgrid.

The grid-forming power converter may be utilised to perform two functions such as to control frequency of the microgrid, or to control an output power of the microgrid. Mainly, the microgrid is a group of interconnected loads and distributed energy resources that acts as a single controllable entity with respect to a main grid. Further, in order to perform the two functions by the grid-forming converter, two independent PID controllers are used. Therefore, when transitioning from one of the PID controller to the other PID controller (i.e., from grid frequency control to output power control) there may be a transient or fluctuation between the PID controllers. The transient may cause trips in protections, breach in contractual obligations (e.g. exceeding maximum power flow or ramp rate). Further, other reported causes are true/valid (e.g. damaging equipment etc). Further, for instance, the transition between an active power control to a frequency control may be delicate since, the transition causes moving to an island condition in which a huge transient may lead to trips in different assets and cause a blackout of the islanded power grid.

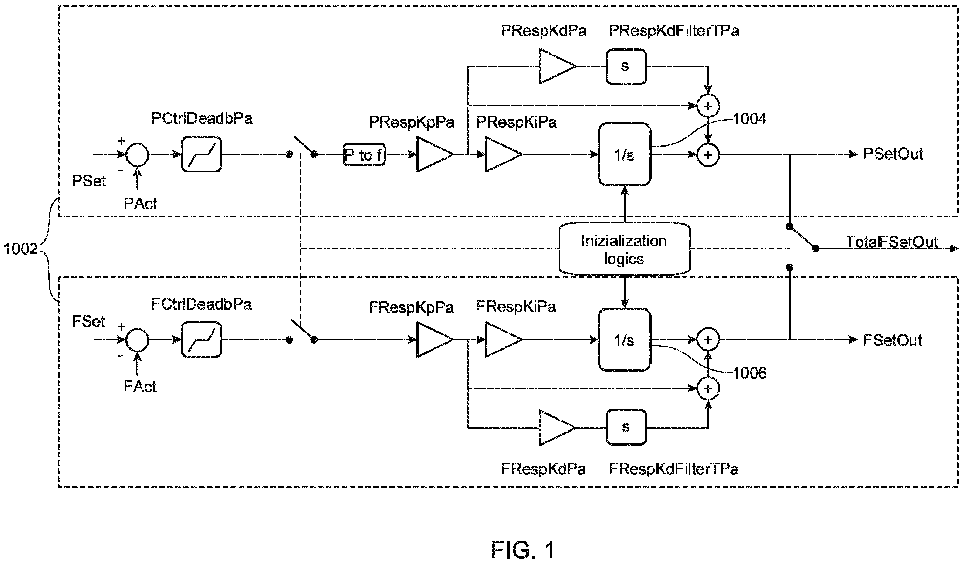

Currently, the standard or the existing solution have two or more controls/controllers (1002) controlling one device. These two or more controls (1002) as shown in FIG. 1 have independent controllers for example, PID. In FIG. 1 the two or more controls (1002), each have an independent integrator (1004, 1006). The two or more controls (1002) with independent integrators (1004, 1006) require initialization logics to allow switching between the two or more controls (1002) to avoid significant transients when the switching between the two or more controls (10002) occurs.

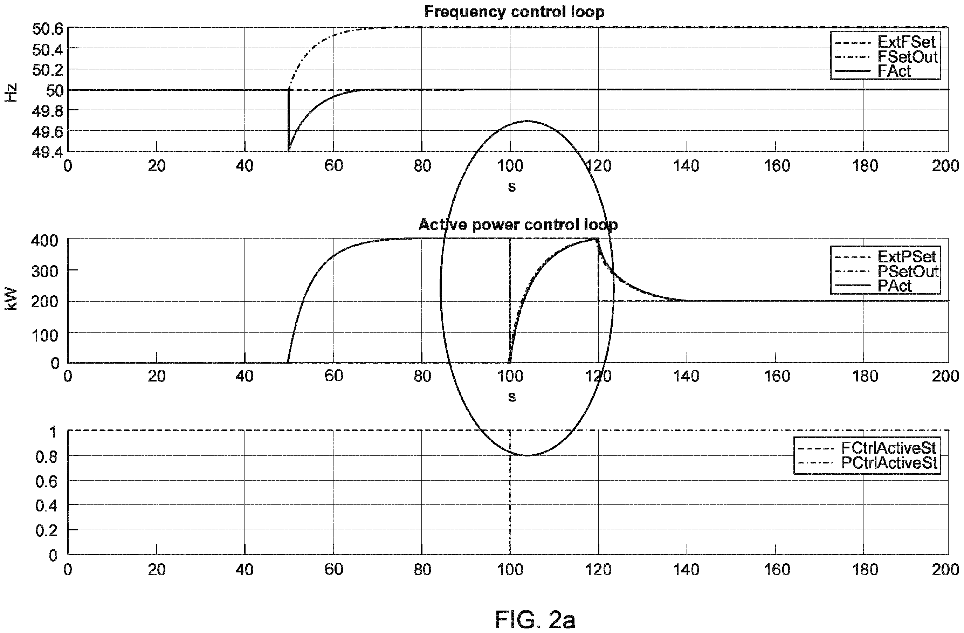

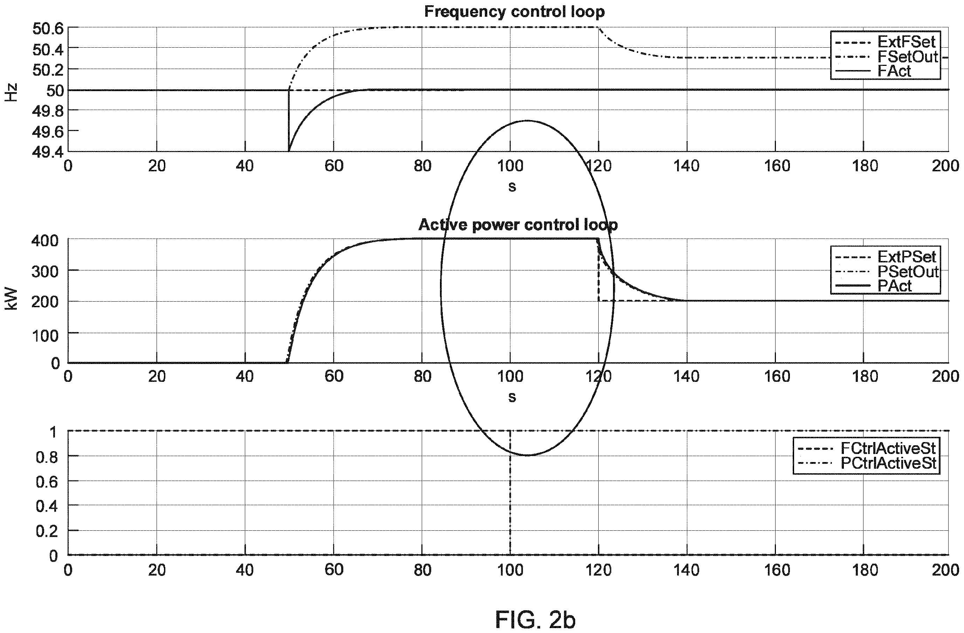

Further, the existing solution is convenient and has separate sets of gains for the two or more PID controllers. However, the problem with the existing solution is the initialization of two or more integrators (1004, 1006) that are connected with the two or more controllers (1002). During the transition from one type of control to the other type of control such as a frequency control to a power control without proper initialization may result in transient in a response (at 100s) as shown in FIG. 2a. Further, these transitions may occur in an un-planned manner due to an event resulting in fluctuations or transient shown using a circle in FIG. 2a. These fluctuations or transient causes signal drop that causes damage to the microgrid or the device and various components of the microgrid/device. Further, FIG. 2a shows a simulation of the PID controllers, in first half of the simulation, a load event may be corrected by the frequency control (at 50s), in a second half an active power setpoint may be achieved with the active power control (at 120s) by performing the transition. The existing solution perform initialization every time before the transition between the PID controllers which results in increased time consumption for the transition. FIG. 2b shows a simulation of the PID controllers with the initialization.

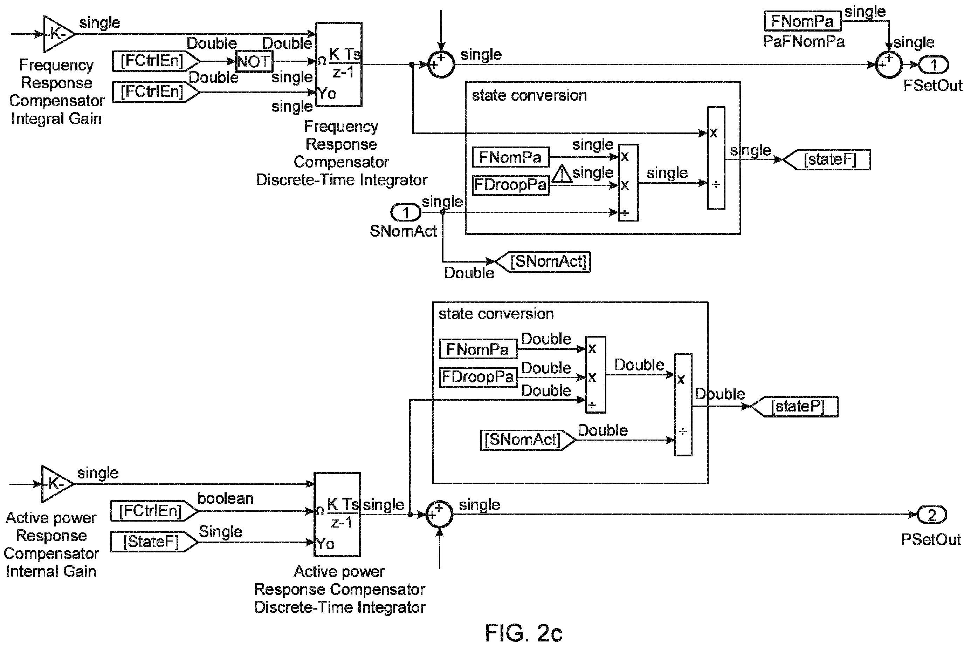

Further, to overcome the initialization problem, the existing solution may use additional logic, as shown in FIG. 2c. The initialization performed using the additional logic for transition between the two or more control (1002) may completely avoid the fluctuation or transient occurring between the PID controllers of the two or more controls (1002). However, the initialization logics adds unnecessary complexity to the PID controllers, also communication delays and power losses can cause errors during the transition.

### SUMMARY

Consequently, there is a need for an improved control system and method for controlling a unit of a power system.

It is therefore an object of the present disclosure to provide a control system and a method for controlling the unit of the power system to mitigate, alleviate, or eliminate all or at least some of the above-discussed drawbacks of presently known solutions.

According to a first aspect of the present disclosure, a control system for controlling the unit of the power system is provided. The control system comprises at least two control channels with different control targets, wherein each control channel of the at least two control channels are arranged to perform one or more control operations for controlling the unit of the power system. Further, at least one control operation is performed as a response to a respective input signal received from the power system. Further, each of the said at least two control channels is connected to a merged control output to the unit of the power system through a shared integrator.

Therefore, with the proposed control system, the power system may have multiple independent control channels with a shared/single integrator. The multiple independent control channels require no initialization logics and avoid significant transients when the switching between the multiple independent control channel occurs. Further, the proposed control system allows the multiple independent control channels to be active simultaneously. Further, with the use of the shared/common integrator the control system maintains flexibility of being able to have different gains sets for different types of control channels. Further, the shared integrator allows seamless transitions between the at least two control channels without any requirement of preloading any complex states of integrators prior to the transition. Further, the control system allows the transition from one type of control channel to another type of control channel with no transient and no initialization.

In some embodiments, the at least one of a target of the different control targets is grid frequency control and another target is converter power control.

In some embodiments, an input signal is received from at least one of: the control system or the power system or from a power system operator.

In some embodiments, the control system comprises select switches in the at least two control channels. The select switches are operated through the input signal to select a control channel from the at least two control channels with a corresponding control target and respective input signal that is active and/or online.

In some embodiments, the at least two control channels, corresponding control targets and respective input signals are active at same time.

In some embodiments, the control system comprises a plurality of control channels, wherein at least one first control channel of the plurality of control channels is for frequency control having a corresponding target as FSet, at least one second control channel is for power control having a corresponding target as PSet, and at least one third control channel is for time control having a corresponding target as TSet. Further, each of the plurality of control channels is connected to the merged control output of the unit of the power system through the shared integrator.

In some embodiments, the merged control output is modified to affect different controllable actuators within the power unit in the power system.

In some embodiments, the different controllable actuators comprise at least one of: a power control actuator affected via TotalPSetOut signal, and a frequency control actuator affected via totalFSetOut signal.

In some embodiments, each control channel is independently tunable having a separate set of gains for each control channel.

According to a second aspect of the present disclosure, a method for controlling a unit of a power system is provided. The method comprises arranging at least two control channels with different control targets, wherein each control channel of the at least two control channels is arranged to perform one or more control operations for controlling the unit of the power system. Further, at least one control operation is performed as a response to a respective input signal received from the power system and wherein each of the said at least two control channels is connected to a merged control output to the unit of the power system through a shared integrator.

In an alternate embodiment, a method of controlling a microgrid system is provided. The method comprises measuring a value of a first entity in the microgrid system. The method comprises comparing the measured value of the first entity with a set value for the first entity and determining a difference between the measured value of the first entity and the set value of the first entity. The method comprises generating a first signal which is proportional to the determined difference between the measured value and the set value of the first entity. The method comprises decoupling the first signal in a first part which is subjected to a derivation operation, a second part which is a proportional part, and a third part which is subjected to an integration operation. The method comprises summing the derivated first part, the second part and the integrated third part of the first signal. The summed signal defines a first setpoint for controlling an electric power device for controlling said first entity and a second entity in the microgrid system. The method comprises measuring a value of a second entity in the microgrid system. The method comprises comparing the measured value of the second entity with a set value for the second entity and determining a difference between the measured value of the second entity and the set value of the second entity. The method comprises generating a second signal which is proportional to the determined difference between the measured value of the second entity and the set value for the second entity. The method comprises decoupling the second signal in a first part which is subjected to a derivation operation, a second part which is a proportional part, and a third part which is subjected to an integration operation. The method comprises summing the derivated first part, the second part and the integrated third part of the second signal. The summed signal defines a second setpoint for controlling the electric power device for controlling the first entity and the second entity in the microgrid system. The method being characterized in that, the integration of the third part of the first signal and of the third part of the second signal is performed in one and the same integrator.

In some embodiment, the first signal is amplified by means of a first gain arrangement and the second signal is amplified by means of a second gain arrangement.

In some embodiments, the first entity is frequency.

In some embodiments, the second entity is electric power.

In some embodiments, the electric power device comprises an electric power converter connected to the microgrid system.

In an alternate embodiment, a control system for controlling a microgrid system is provided. The control system comprises means for measuring a value of a first entity in the microgrid system. The control system comprises means for comparing the measured value of the first entity with a set value for the first entity and determining a difference between the measured value of the first entity and the set value of the first entity. The control system comprises means for generating a first signal which is proportional to the determined difference between the measured value and the set value of the first entity. The control system comprises means for decoupling the first signal in a first part which is subjected to a derivation operation, a second part which is a proportional part, and a third part which is subjected to an integration operation. The control system comprises means for summing the derivated first part, the second part and the integrated third part of the first signal. The summed signal defines a first setpoint for controlling an electric power device for controlling said first entity and a second entity in the microgrid system. The control system comprises means for measuring a value of a second entity in the microgrid system. The control system comprises means for comparing the measured value of the second entity with a set value for the second entity and determining a difference between the measured value of the second entity and the set value of the second entity. The control system comprises means for generating a second signal which is proportional to the determined difference between the measured value of the second entity and the set value for the second entity. The control system comprises means for decoupling the second signal in a first part which is subjected to a derivation operation, a second part which is a proportional part, and a third part which is subjected to an integration operation. The control system comprises means for summing the derivated first part, the second part and the integrated third part of the second signal, wherein the summed signal defines a second setpoint for controlling the electric power device for controlling the first entity and the second entity in the microgrid system. The system being characterized in that, the means for integration of the third part of the first signal and of the third part of the second signal comprises a common integrator.

In some embodiments, the control system comprises a first gain arrangement for amplifying the first signal and a second gain arrangement for amplifying the second signal.

In some embodiments, the first entity is frequency.

In some embodiments, the second entity is electric power.

In some embodiments, the electric power device comprises an electric power converter connected to the microgrid system.

Advantageously, the proposed control system removes transients during transitions. Transients may be damaging, as they can cause significant power, voltage or current increases or decreases which may damage equipment, cause faults, maloperation or even injuries of operators. Further, the control system reduces engineering time and CPU load dedicated for preloading of the states of the integrators prior to the transition. The controls system allows for maintaining independent set of gains for the two control channels. Further, the control system enables parallel operation of the two control channels (e.g. frequency control and active power control) with different set of gains producing a unique setpoint.

In some embodiments, any of the above aspects may additionally have features identical with or corresponding to any of the various features as explained above for any of the other aspects.

Other advantages may be readily apparent to one having skill in the art. Certain embodiments may have none, some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is an existing solution illustrating multiple independent controllers according to some embodiments;
FIGs. 2a and 2b show simulations of multiple independent controllers of the existing solution according to some embodiments;
FIG. 2c shows additional logic of the existing solution for initialization of multiple independent controllers according to come embodiments;
FIG. 3 shows a control system for controlling a unit of a power system according to some embodiments;
FIG. 4 shows a flowchart illustrating example steps for a method for controlling a unit of a power system according to some embodiments;
FIG. 5 shows a simulation of multiple independent controllers of a control system for controlling a unit of a power system according to some embodiments;
FIG. 6 shows an example of control system for controlling a unit of a power system according to some embodiments;
FIG. 7 shows an output of a power control actuator according to some embodiments; and
FIG. 8 shows an output of a frequency control actuator according to some embodiments.

### DETAILED DESCRIPTION

Aspects of the present disclosure will be described more fully hereinafter with reference to the accompanying drawings. The method and control system disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the examples set forth herein.

In the following description of exemplary embodiments, the same reference numerals denote the same or similar components.

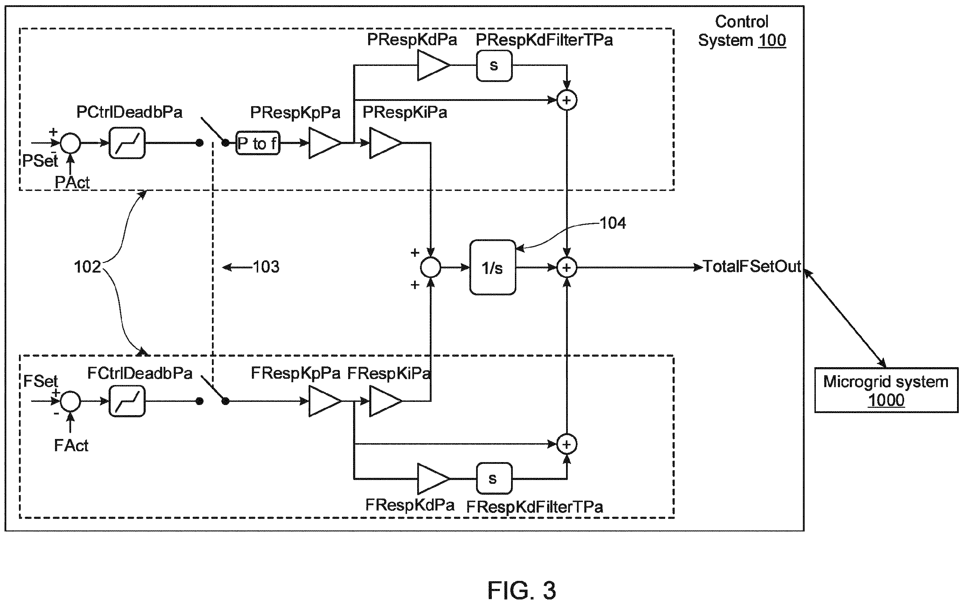

FIG. 3 shows a control system (100) for controlling a unit of a power system (1000) according to some embodiments. In some embodiments, the control system (100) for controlling the unit of the power system (1000) is provided. For example, the power system (1000) may be a microgrid system (1000). The control system (100) comprises at least two control channels (102) with different control targets. Each control channel of the at least two control channels (102) is arranged to perform one or more control operations for controlling the unit of the power system/microgrid system (1000). Further, at least one control operation is performed as the response to a respective input signal received from the power system/microgrid system (1000). Further, each of the at least two control channels (102) are connected to the merged control output to the unit of the power system/microgrid system (1000) through the shared integrator (104).

In some embodiments, the at least one of the target of the different control targets is grid frequency control and another target is converter power control.

In some embodiments, the input signal (103) is received from at least one of: the control system (100) or the power system/microgrid system (1000) or from the power system operator.

In some embodiments, the control system (100) comprises select switches in the at least two control channels (102). The select switches are operated through the input signal (103) to select a control channel from the at least two control channels (102) with a corresponding control target and respective input signal (103) that is active and/or online.

In some embodiments, the at least two control channels (102), corresponding control targets and respective input signal (103) are active at same time.

In some embodiments, the control system (100) comprises the plurality of control channels, wherein at least one first control channel of the plurality of control channels is for frequency control having a corresponding target as FSet, at least one second control channel is for power control having a corresponding target as PSet, and at least one third control channel is for time control having a corresponding target as TSet. Further, each of the plurality of control channels is connected to the merged control output of the unit of the power system (1000) through the shared integrator (104).

In some embodiments, the merged output control channel is modified to affect different controllable actuators within the power unit in the power system/microgrid system (1000).

In some embodiments, the different controllable actuators comprise at least one of: the power control actuator affected via TotalPSetOut signal, and the frequency control actuator affected via totalFSetOut signal.

In some embodiments, each control channel (102) is independently tunable having separate set of gains for each control channel (102).

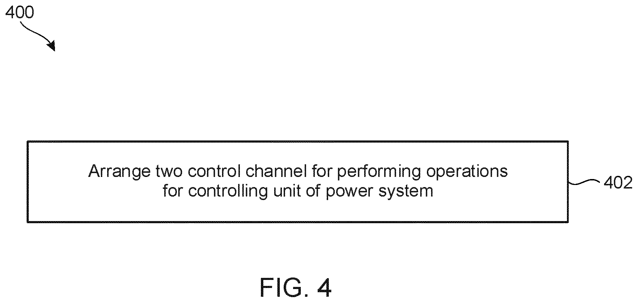

FIG. 4 shows a flowchart illustrating example steps for a method (400) for controlling the unit of the power system (1000) according to some embodiments.

At step 402, the method (400) comprises arranging at least two control channels (102) with different control targets. Each control channel of the at least two control channels (102) is arranged to perform one or more control operations for controlling the unit of the power system (1000). Further, at least one control operation is performed as a response to respective input signal received from the power system (1000). Each of the at least two control channels (102) are connected to the merged control output to the unit of the power system (1000) through the shared integrator (104).

In some embodiments, the control system (100) involves using the shared/single integrator (1/s) (104) with two different sets of gains to decouple/separate dynamics (Kp, Ki, Kd) as illustrated in FIG. 3. In an embodiment, errors caused due to the transition between the at least two control channels (102) are summed together and fed to the shared/single integrator (104). Similarly, a proportional and a derivative part of the at least two control channels (102) are summed with the shared/single integrator (104) which contributes to form a final setpoint.

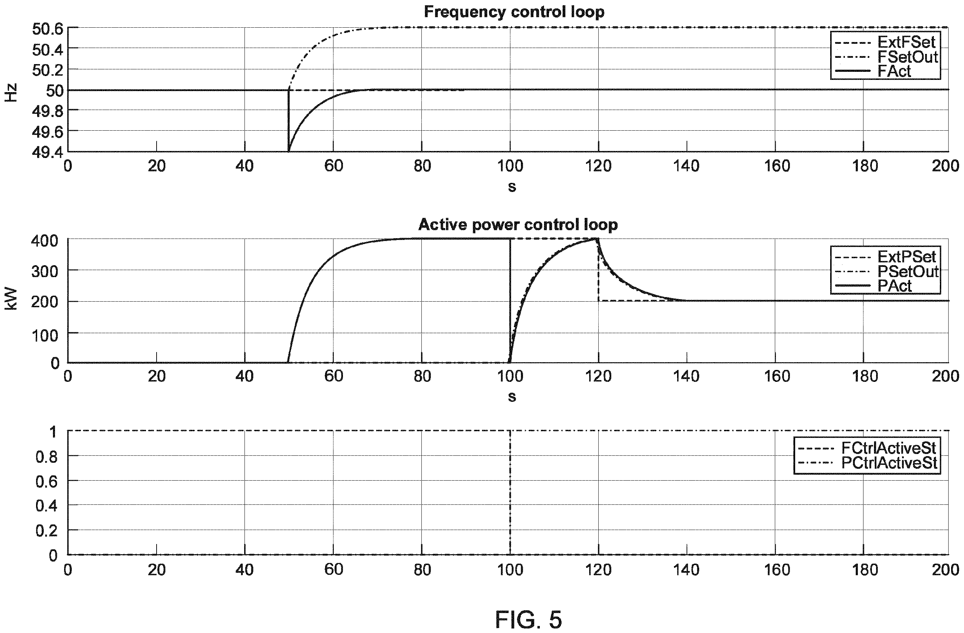

In some embodiments, FIG. 5 shows a simulation of a control transition showing the transition from the power control to the frequency control using the proposed method (400). The simulation shows a small/negligent transient in the response (at 100s).

In some embodiments, the control system (100) is used in a e-mesh control for both frequency-active power control and voltage-reactive power control in a Battery Energy Storage System (BESS) and microgrid segments (e.g. emC-G, emC-E and emC-BESS PPC).

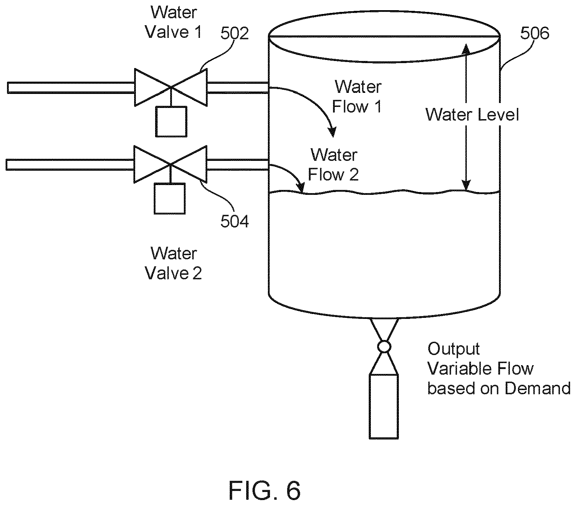

In some embodiments, FIG. 6 shows an example of the control system (100) for controlling the unit of the power system (1000). FIG. 6 shows a water tank (506), a water valve 1 (502) and a water valve 2 (504). In an embodiment, a single water valve (e.g. water valve 1 (502)) may be controlled to control either water level, or water flow 1, or both. In another embodiment, a single water valve (e.g. water valve 2 (504)) may be controlled to control either water level, or water flow 2, or both. In an embodiment the control system (100) may control the two water valves (502, 504) for controlling the water level, water flow or both in the water tank 506.

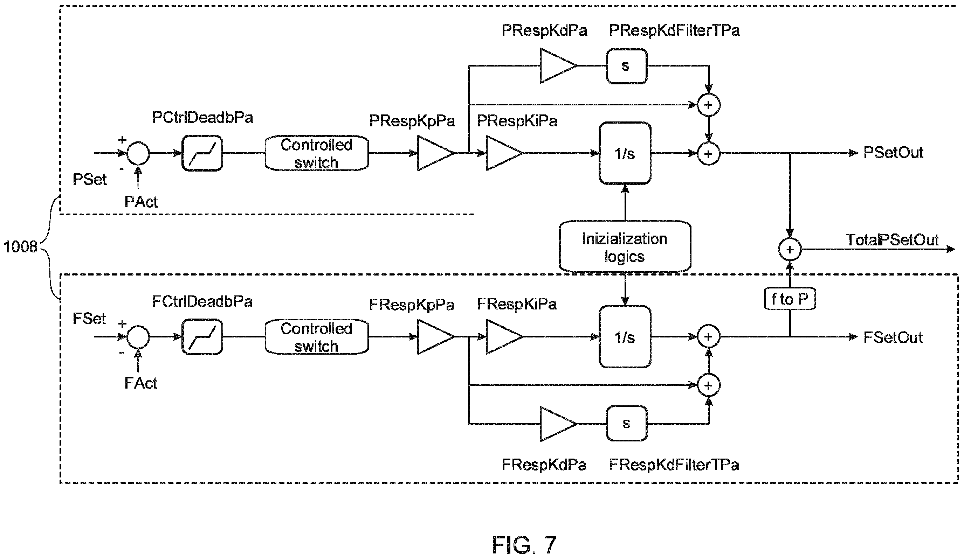

FIG. 7 shows an output of the power control actuator which is a power setpoint (TotalPsetOut).

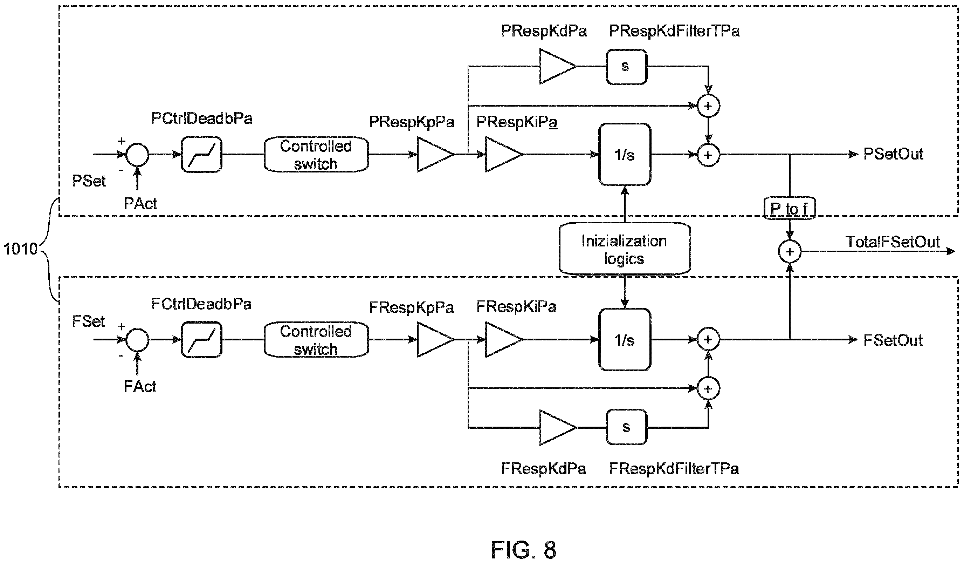

FIG. 8 shows an output of the frequency control actuator which is a frequency setpoint (TotalFSetOut).

In some embodiments, the control system (100) is applicable to numerous systems, in particular to flow controls for a tank with at least two control targets. In particular a first target being fluid level, and a second target being fluid flow.

In some embodiments, at least two control targets from the different control targets refer to target set for a similar number of channels of the plurality of channels. The similar number of channels have independent tuning and are active separately or simultaneously.

In some embodiments, the control system (100) is generalizable to a broad variety of different applications and/or processes, in particular power distribution, fleet management, water management.

In an embodiment, a person skilled in the art may understand that the proposed control system (100) may comprise more than two control channels (102) with the shared integrator (104) and is not limited to two control channels (102). The shared integrator (104) is not involved in any switching/transition process and does not receive any switching signal. The shared integrator (104) is continuously processing all control signals received for the transition between the at least two control channels (102). The switching process may take place depending on components/status of the microgrid system (1000).

In some embodiments, the proposed control system (100) may have distinct PID controllers with automatic tracking between the PID controllers exposing state and errors signals of the integrators. This requires additional logic (e.g. CPU usage) and a delay to avoid algebraic loop error that discard the seamless transition.

In another embodiment, the proposed control system (100) may have a single set of gains for both controls (at least two control channels (102)) to reduce number of parameters. However, this requires an external logic to change values of the parameters based on the control system (100) condition (is landed or grid connected) and will not allow parallel operations.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A control system (100) for controlling a unit of a power system (1000), wherein the control system (100) comprises:
at least two control channels (102) with different control targets, wherein each control channel (102) of the at least two control channels (102) are arranged to perform one or more control operations for controlling the unit of the power system (1000),
wherein at least one control operation is performed as a response to a respective input signal received from the power system (1000) and wherein each of the said at least two control channels (102) is connected to a merged control output of the unit of the power system (1000) through a shared integrator (104).

2. The control system (100) according to claim 1, wherein at least one of a target of the different control targets is grid frequency control, and another target is converter power control.

3. The control system (100) according to any of the preceding claims, wherein an input signal (103), is received from at least one of:
the control system (100) or the power system (1000) or from a power system operator.

4. The control system (100) according to any of the preceding claims, comprising:
select switches in the at least two control channels (102), wherein the select switches are operated through the input signal (103) to select a control channel from the at least two control channels (102) with a corresponding control target and respective input signal that is active and/or online.

5. The control system (100) according to any of the preceding claims, wherein the at least two control channels (102), corresponding control targets and respective input signals are active at same time.

6. The control system (100) according to one of the preceding claims, comprising:
a plurality of control channels, wherein at least one first control channel of the plurality of control channels is for frequency control having a corresponding target as FSet, at least one second control channel is for power control having a corresponding target as PSet, and at least one third control channel is for time control having a corresponding target as TSet,
wherein each of the plurality of control channels is connected to the merged control output of the unit of the power system (1000) through the shared integrator (104).

7. The control system (100) according to one of the preceding claims, comprising:
the merged control output is modified to affect different controllable actuators within a power unit in the power system (100).

8. The control system (100) according to claim 7, wherein the different controllable actuators comprise at least one of:
a power control actuator affected via TotalPSetOut signal; and
a frequency control actuator affected via totalFSetOut signal.

9. The control system (100) according to one of the preceding claims, wherein each control channel (102) is independently tunable having a separate set of gains for each control channel (102).

10. A method for controlling a unit of a power system (1000), wherein the method comprises:
arranging at least two control channels (102) with different control targets, wherein each control channel (102) of the at least two control channels (102) is arranged to perform one or more control operations for controlling the unit of the power system (1000),
wherein at least one control operation is performed as a response to a respective input signal received from the power system (1000) and wherein each of the said at least two control channels (102) is connected to a merged control output to the unit of the power system (1000) through a shared integrator (104).
